# EUROPEAN PATENT SPECIFICATION

(11) **EP 2 937 383 B1**
(45) Date of publication and mention of the grant of the patent: **31.01.2018**
(21) Application number: 13864244.2
(22) Date of filing: 19.12.2013
(51) Int. Cl.: C08L 13/00, C08L 9/02, C08K 5/17

(54) **NITRILE RUBBER COMPOSITION, AND RUBBER CROSS-LINKED PRODUCT**
NITRILKAUTSCHUKZUSAMMENSETZUNG UND KAUTSCHUKVERNETZTES PRODUKT
COMPOSITION DE CAOUTCHOUC NITRILE ET PRODUIT DE CAOUTCHOUC RÉTICULÉ

(30) Priority: 20.12.2012 JP 2012277674
(43) Date of publication of application: 28.10.2015
(73) Proprietor: Zeon Corporation, Tokyo 100-8246 (JP)
(72) Inventor: KATADA, Arinobu, Tokyo 100-8246 (JP)
(74) Representative: Beckmann, Claus
(86) International application number: PCT/JP2013/084020
(87) International publication number: WO 2014/098170

(56) References cited:
- EP-A1- 0 825 224
- EP-A1- 1 234 851
- EP-A1- 1 964 882
- EP-A1- 2 239 297
- JP-A- S5 670 038
- JP-A- S5 670 038
- JP-A- H09 309 975
- JP-A- S61 126 151
- JP-A- 2001 055 471
- JP-A- 2002 088 196
- JP-A- 2002 212 341
- JP-A- 2002 302 571
- JP-B2- 3 894 278
- US-A1- 2002 061 961
- US-A1- 2003 204 008
- US-A1- 2003 204 008
- US-A1- 2009 186 977

## Description

### TECHNICAL FIELD

The present invention relates to a nitrile rubber composition which gives a cross-linked rubber which is excellent in moldability (in particular, fluidity when simultaneously molding and cross-linking) and compression set resistance and a cross-linked rubber which is obtained by using that nitrile rubber composition.

### BACKGROUD ART

In the past, nitrile rubber (acrylonitrile-butadiene copolymer rubber), taking advantage of its oil resistance, mechanical characteristics, chemical resistance, etc., has been used as a material for hoses, tubes, and other rubber parts for automobiles. Further, hydrogenated nitrile rubber (hydrogenated acrylonitrile-butadiene copolymer rubber) which is obtained by hydrogenating the carbon-carbon double bonds in the polymer main chain of nitrile rubber is further excellent in heat resistance, so is used for seals, belts, hoses, diaphrams, and other rubber parts.

As such a nitrile rubber composition, for example, Patent Document 1 proposes a nitrile rubber composition which contains a hydrogenated nitrile rubber which has α,β-ethylenically unsaturated dicarboxylic acid monoester monomer units, a polyamine-based cross-linking agent, and a basic cross-linking accelerator. According to the nitrile rubber composition which is described in this Patent Document 1, a cross-linked rubber which is excellent in heat resistance, bending fatigue resistance, etc. and is small in compression set is obtained.

On the other hand, in recent years, the market has been making higher demands on quality, and rubber parts which have complicated shapes have come to be sought. However, the nitrile rubber composition which is described in the above Patent Document 1 is not sufficient in fluidity at the time of cross-linking, so when cross-linking simultaneously with molding in a mold which has a complicated shape so as to obtain a rubber part which has a complicated shape, the composition cannot flow to the furthest extents of the mold and therefore there was the problem that it was not possible to obtain a rubber part which has a complicated shape with a good yield (with little occurrence of defects).

### PRIOR ART DOCUMENTS

### PATENT DOCUMENTS

Patent Document 1: Japanese Patent Publication No. 2001-55471A

### SUMMARY OF THE INVENTION

### PROBLEM TO BE SOLVED BY THE INVENTION

The present invention has as its object the provision of a nitrile rubber composition which gives a cross-linked rubber which is excellent in moldability (in particular, fluidity when simultaneously molding and cross-linking) and compression set resistance and a cross-linked rubber which is obtained by using the nitrile rubber composition.

### MEANS FOR SOLVING THE PROBLEMS

The present inventors engaged in in-depth research to achieve the above object and as a result discovered that by mixing, into a carboxyl group-containing nitrile rubber, a liquid nitrile rubber and a polyamine cross-linking agent, the above object can be achieved, and thereby completed the present invention.

That is, according to the present invention, there is provided a nitrile rubber composition which contains a carboxyl group-containing nitrile rubber (A), a liquid nitrile rubber (B), and a polyamine-based cross-linking agent (C).

In the nitrile rubber composition of the present invention, preferably the carboxyl group-containing nitrile rubber (A) has an iodine value of 120 or less.

Preferably, the carboxyl group-containing nitrile rubber (A) contains α,β-ethylenically unsaturated nitrile monomer units 5 to 60 wt%, carboxyl group-containing monomer units 0.1 to 20 wt%, and conjugated diene monomer units 15 to 94.9 wt%.

Preferably, a content of the liquid nitrile rubber (B) is 1 to 50 parts by weight with respect to 100 parts by weight of the carboxyl group-containing nitrile rubber (A).

Preferably, the liquid nitrile rubber (B) contains α,β-ethylenically unsaturated nitrile monomer units 10 to 60 wt% and conjugated diene monomer units 40 to 90 wt%.

Preferably, the nitrile rubber composition of the present invention further contains a basic cross-linking accelerator.

Further, according to the present invention, there is provided a cross-linked rubber comprised of the above nitrile rubber composition which has been cross-linked.

### EFFECTS OF THE INVENTION

According to the present invention, there are provided a nitrile rubber composition which gives a cross-linked rubber which is excellent in moldability (in particular, fluidity when simultaneously molding and cross-linking) and compression set resistance and a cross-linked rubber which is obtained by cross-linking the nitrile rubber composition and which is provided with the above characteristics. In particular, according to the nitrile rubber composition of the present invention, the fluidity when simultaneously molding and cross-linking is excellent, so by using the above composition, it is possible to obtain, as the obtained cross-linked rubber, a rubber part which has a complicated shape with a good yield (with little occurrence of defects).

### BRIEF DESCRIPTION OF DRAWINGS

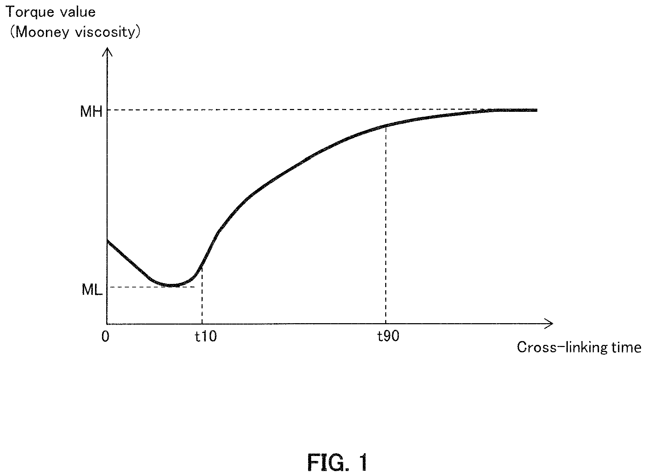

[FIG. 1] FIG. 1 is a graph which shows the changes in the Mooney viscosity when cross-linking a nitrile rubber composition.

### DESCRIPTION OF EMBODIMENTS

### Nitrile Rubber Composition

The nitrile rubber composition of the present invention contains a carboxyl group-containing nitrile rubber (A), a liquid nitrile rubber (B), and a polyamine cross-linking agent (C).

### Carboxyl Group-Containing Nitrile Rubber (A)

First, the carboxyl group-containing nitrile rubber (A) used in the present invention will be explained. The carboxyl group-containing nitrile rubber (A) used in the present invention is rubber which is obtained by copolymerizing an α,β-ethylenically unsaturated nitrile monomer, a carboxyl group-containing monomer, and a copolymerizable other monomer which is added as needed.

The α,β-ethylenically unsaturated nitrile monomer is not particularly limited so long as an α,β-ethylenically unsaturated compound which has nitrile groups. For example, acrylonitrile; α-chloroacrylonitrile, α-bromoacrylonitrile, and other α-halogenoacrylonitriles; methacrylonitrile and other α-alkylacrylonitriles; etc. may be mentioned. Among these as well, acrylonitrile and methacrylonitrile are preferable, while acrylonitrile is more preferable. The α,β-ethylenically unsaturated nitrile monomer may be used as a single type alone or as a plurality of types together.

The content of the α,β-ethylenically unsaturated nitrile monomer units is preferably 5 to 60 wt% with respect to the total monomer units, more preferably 10 to 55 wt%, furthermore preferably 15 to 50 wt%. If the content of the α,β-ethylenically unsaturated nitrile monomer units is too small, the obtained cross-linked rubber is liable to fall in oil resistance, while conversely if too large, the cold resistance may fall.

The carboxyl group-containing monomer is not particularly limited so long as a monomer which can be copolymerized with an α,β-ethylenically unsaturated nitrile monomer and which has at least one unsubstituted (free) carboxyl group which is not esterified etc. By using a carboxyl group-containing monomer, a carboxyl group can be introduced into a nitrile rubber.

As the carboxyl group-containing monomer used in the present invention, for example, an α,β-ethylenically unsaturated monocarboxylic acid monomer, α,β-ethylenically unsaturated polyvalent carboxylic acid monomer, α,β-ethylenically unsaturated dicarboxylic acid monoester monomer, etc. may be mentioned. Further, the carboxyl group-containing monomer also includes monomers where the carboxyl groups of these monomers form carboxylic acid salts. Furthermore, an anhydride of an α,β-ethylenically unsaturated polyvalent carboxylic acid also causes the acid anhydride groups to cleave apart after copolymerization to form carboxyl groups, so can be used as a carboxyl group-containing monomer.

As the α,β-ethylenically unsaturated monocarboxylic acid monomer, acrylic acid, methacrylic acid, ethylacrylic acid, crotonic acid, cinnamic acid, etc. may be mentioned.

As the α,β-ethylenically unsaturated polyvalent carboxylic acid monomer, fumaric acid, maleic acid and other butenedioic acids, itaconic acid, citraconic acid, mesaconic acid, glutaconic acid, allylmalonic acid, tetraconic acid, etc. may be mentioned. Further, as anhydrides of α,β-unsaturated polyvalent carboxylic acids, maleic acid anhydride, itaconic anhydride, citraconic anhydride, etc. may be mentioned.

As the α,β-ethylenically unsaturated dicarboxylic acid monoester monomer, monomethyl maleate, monoethyl maleate, monopropyl maleate, mono n-butyl maleate, and other maleic acid monoalkyl esters; monocyclopentyl maleate, monocyclohexyl maleate, monocycloheptyl maleate, and other maleic acid monocycloalkyl esters; monomethylcyclopentyl maleate, monoethylcyclohexyl maleate, and other maleic acid monoalkylcycloalkyl esters; monomethyl fumarate, monoethyl fumarate, monopropyl fumarate, mono n-butyl fumarate, and other fumaric acid monoalkyl esters; monocyclopentyl fumarate, monocyclohexyl fumarate, monocycloheptyl fumarate, and other fumaric acid monocycloalkyl esters; monomethylcyclopentyl fumarate, monoethylcyclohexyl fumarate, and other fumaric acid monoalkylcycloalkyl esters; monomethyl citraconate, monoethyl citraconate, monopropyl citraconate, mono n-butyl citraconate, and other citraconic acid monoalkyl esters; monocyclopentyl citraconate, monocyclohexyl citraconate, monocycloheptyl citraconate, and other citraconic acid monocycloalkyl esters; monomethylcyclopentyl citraconate, monoethylcyclohexyl citraconate, and other citraconic acid monoalkylcycloalkyl esters; monomethyl itaconate, monoethyl itaconate, monopropyl itaconate, mono n-butyl itaconate, and other itaconic acid monoalkyl esters; monocyclopentyl itaconate, monocyclohexyl itaconate, monocycloheptyl itaconate, and other itaconic acid monocycloalkyl esters; monomethylcyclopentyl itaconate, monoethylcyclohexyl itaconate, and other itaconic acid monoalkylcycloalkyl esters; etc. may be mentioned.

The carboxyl group-containing monomer may be used as a single type alone or as a plurality of types together. Among these as well, since the advantageous effects of the present invention become much more remarkable, an α,β-ethylenically unsaturated dicarboxylic acid monoester monomer is preferable, a maleic acid monoalkyl ester and fumaric acid monoalkyl ester are more preferable, a maleic acid monoalkyl ester is furthermore preferable, and mono-n-butyl maleate is particularly preferable. Note that, as the number of carbon atoms of the alkyl group of the above-mentioned maleic acid monoalkyl ester and fumaric acid monoalkyl ester, 2 to 8 is preferable.

The content of the carboxyl group-containing monomer units is preferably 0.1 to 20 wt% with respect to the total monomer units, more preferably 0.2 to 15 wt%, furthermore preferably 0.5 to 10 wt%. If the content of the carboxyl group-containing monomer units is too small, the obtained cross-linked rubber is liable to deteriorate in mechanical strength and compression set resistance, while conversely if too large, the nitrile rubber composition is liable to deteriorate in scorch stability and the obtained cross-linked rubber is liable to fall in fatigue resistance.

Further, the carboxyl group-containing nitrile rubber (A) used in the present invention is preferably one which is obtained by copolymerizing, in addition to the α,β-ethylenically unsaturated nitrile monomer and carboxyl group-containing monomer, a conjugated diene monomer, from the viewpoint of the obtained cross-linked rubber exhibiting a rubber elasticity.

As the conjugated diene monomer which forms the conjugated diene monomer units, 1,3-butadiene, isoprene, 2,3-dimethyl-1,3-butadiene, 1,3-pentadiene, chloroprene, and other conjugated diene monomers containing 4 to 6 carbon atoms are preferable, 1,3-butadiene and isoprene are more preferable, and 1,3-butadiene is particularly preferable. The conjugated diene monomer may be used as a single type alone or as a plurality of types together.

The content of the conjugated diene monomer units is preferably 15 to 94.9 wt% with respect to the total monomer units, more preferably 20 to 89.8 wt%, furthermore preferably 25 to 84.5 wt%. If the content of the conjugated diene monomer units is too small, the obtained cross-linked rubber is liable to fall in rubber elasticity, while conversely if too large, the heat resistance or chemical resistance stability may be impaired. Note that the content of the conjugated diene monomer units is the content including also the hydrogenated part when performing the later explained hydrogenation.

Further, the carboxyl group-containing nitrile rubber used in the present invention may be copolymerized together with the α,β-ethylenically unsaturated nitrile monomer, carboxyl group-containing monomer, and conjugated diene monomer, other monomer which can be copolymerized with these. As such other monomer, ethylene, an α-olefin monomer, aromatic vinyl monomer, α,β-ethylenically unsaturated carboxylic acid ester monomer (except one corresponding to the above-mentioned "carboxyl group-containing monomer"), fluorine-containing vinyl monomer, copolymerizable anti-aging agent, etc. may be illustrated.

As the α-olefin monomer, one with 3 to 12 carbon atoms is preferable. For example, propylene, 1-butene, 4-methyl-1-pentene, 1-hexene, 1-octene, etc. may be mentioned.

As the aromatic vinyl monomer, for example, styrene, α-methylstyrerle, vinylpyridine, etc. may be mentioned.

As the α,β-ethylenically unsaturated carboxylic acid ester monomer (except ones corresponding to the above "carboxyl group-containing monomer"), for example, methyl acrylate, ethyl acrylate, n-butyl acrylate, n-dodecyl acrylate, methyl methacrylate, ethyl methacrylate, and other (meth)acrylatic acid esters (abbreviation for "methacrylic acid esters and acrylic acid esters", same below) which have alkyl groups with 1 to 18 carbon atoms; methoxymethyl acrylate, methoxyethyl acrylate, methoxyethyl methacrylate, and other (meth)acrylic acid esters which have alkoxyalkyl groups with 2 to 12 carbon atoms; α-cyanoethyl acrylate, α-cyanoethyl methacrylate, α-cyanobutyl methacrylate, and other (meth)acrylic acid esters which have cyanoalkyl groups with 2 to 12 carbon atoms; 2-hydroxyethyl acrylate, 2-hydroxypropyl acrylate, 2-hydroxyethyl methacrylate, and other (meth)acrylic acid esters which have hydroxyalkyl groups with 1 to 12 carbon atoms; trifluoroethyl acrylate, tetrafluoropropyl methacrylate, and other (meth)acrylic acid esters which have fluoroalkyl groups with 1 to 12 carbon atoms; dimethyl maleate, dimethyl fumarate, dimethyl itaconate, diethyl itaconate, and other α,β-ethylenically unsaturated dicarboxylic acid dialkyl esters; dimethylaminomethyl acrylate, diethylaminoethyl acrylate, and other dialkylamino group-containing α,β-ethylenically unsaturated carboxylic acid esters; etc. may be mentioned.

As the fluorine-containing vinyl monomer, for example, fluoroethylvinyl ether, fluoropropylvinyl ether, o-trifluoromethyl styrene, vinyl pentafluorobenzoate, difluoroethylene, tetrafluoroethylene, etc. may be mentioned.

As the copolymerizable antiaging agent, for example, N-(4-anilinophenyl)acrylamide, N-(4-anilinophenyl)methacrylamide, N- (4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned.

These copolymerizable other monomers may also be used as a plurality of types together. The content of the units of the other monomers is preferably 50 wt% or less with respect to the total monomer units, more preferably 30 wt% or less, furthermore preferably 10 wt% or less.

The carboxyl group-containing nitrile rubber has an iodine value of preferably 120 or less, more preferably 60 or less, furthermore preferably 40 or less, particularly preferably 30 or less. By making the iodine value 120 or less, the obtained cross-linked rubber can be improved in heat resistance and ozone resistance.

The carboxyl group-containing nitrile rubber has a polymer Mooney viscosity (ML₁₊₄, 100°C) of preferably 10 to 200, more preferably 15 to 150, furthermore preferably 15 to 100, particularly preferably 30 to 70. If the carboxyl group-containing nitrile rubber is too low in polymer Mooney viscosity, the obtained cross-linked rubber is liable to fall in mechanical characteristics, while conversely if too high, the nitrile rubber composition may fall in moldability.

Further, in the carboxyl group-containing nitrile rubber, the content of carboxyl groups, that is, the number of moles of carboxyl groups per 100 g of the carboxyl group-containing nitrile rubber, is preferably 5×10⁻⁴ to 5×10⁻¹ ephr, more preferably 1×10⁻³ to 1×10⁻¹ ephr, particularly preferably 5×10⁻³ to 6×10⁻² ephr. If the carboxyl group-containing nitrile rubber is too low in content of carboxyl groups, the obtained cross-linked rubber is liable to fall in mechanical properties, while if too large, the cold resistance may fall.

The method of production of the carboxyl group-containing nitrile rubber of the present invention is not particularly limited, but it is preferable to produce it by using an emulsifier for emulsion polymerization so as to copolymerize the above-mentioned monomers to prepare a latex of a copolymer rubber and then hydrogenate this. At the time of emulsion polymerization, an emulsifier, polymerization initiator, molecular weight adjuster, and other usually used secondary polymerization material may be used.

The emulsifying agent is not particularly limited, but, for example, polyoxyethylenealkyl ether, polyoxyethylenealkylphenol ether, polyoxyethylenealkyl ester, polyoxyethylenesorbitanalkyl ester, and other nonionic emulsifying agent; a salt of myristic acid, palmitic acid, oleic acid, linoleic acid, and other fatty acid, sodium dodecylbenzene sulfonate and other alkylbenzene sulfonate, higher alcohol sulfuric ester salt, alkyl sulfosuccinic acid salt, and other anionic emulsifying agent; sulfoester of α,β-unsaturated carboxylic acid, sulfate ester of α,β-unsaturated carboxylic acid, sulfoalkyl arylether, and other copolymerizable emulsifying agent; etc. may be mentioned. The amount of use of the emulsifying agent is preferably 0.1 to 10 parts by weight with respect to 100 parts by weight of the total monomers.

The polymerization initiator is not particularly limited if a radical initiator, but potassium persulfate, sodium persulfate, ammonium persulfate, potassium perphosphate, hydrogen peroxide, and other inorganic peroxides; t-butyl peroxide, cumen hydroperoxide, p-mentane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butyl peroxyisobutyrate, and other organic peroxides; azobisisobutyronitrile, azobis-2,4-dimethyl valeronitrile, azobiscyclohexane carbonitrile, methyl azobisisobutyrate, and other azo compounds; etc. may be mentioned. The polymerization initiator may be used alone or as two types or more combined. As the polymerization initiator, an inorganic or organic peroxide is preferable. When using the peroxide as the polymerization initiator, it may be combined with sodium hydrogen sulfite, ferrous sulfate, and other reducing agents for use as a redox-based polymerization initiator. The amount of use of the polymerization initiator is preferably 0.01 to 2 parts by weight with respect to 100 parts by weight of the total monomers.

The molecular weight adjuster is not particularly limited, but t-dodecyl mercaptan, n-dodecyl mercaptan, octyl mercaptan, and other mercaptans; carbon tetrachloride, methylene chloride, methylene bromide, and other halogenated hydrocarbon; α-methylstyrene dimer; tetraethylthiuram disulfide, dipentamethylene thiuram disulfide, diisopropyl xantogen disulfide, and other sulfur-containing compounds etc. may be mentioned. These may be used alone or in two or more types combined. Among these as well, mercaptans are preferable, and t-dodecyl mercaptan is more preferable. The amount of use of the molecular weight adjuster is preferably 0.1 to 0.8 part by weight with respect to 100 parts by weight of the total monomers.

For the solvent for the emulsion polymerization, usually water is used. The amount of water is preferably 80 to 500 parts by weight with respect to 100 parts by weight of the total monomers.

At the time of emulsion polymerization, further, in accordance with need, a stabilizer, dispersant, pH adjuster, deoxidant, particle size adjuster, and other secondary polymerization material may be used. In the case of using these, the types and amounts of use are also not particularly limited.

Note that, when the copolymer obtained by copolymerization has an iodine value higher than 120, it is also possible to hydrogenate the copolymer (perform a hydrogen addition reaction) so as to make the iodine value 120 or less. In this case, the method of hydrogenation is not particularly limited. A known method may be employed.

### Liquid Nitrile Rubber (B)

The liquid nitrile rubber (B) used in the present invention is a nitrile rubber which has a liquid state at 25°C (has fluidity at 25°C). The liquid nitrile rubber (B) used in the present invention, for example, is one where the Mooney viscosity which is measured based on JIS K6300 is usually 1 or less or one where the viscosity is too low and the Mooney viscosity cannot be measured.

The liquid nitrile rubber (B) used in the present invention is usually obtained by copolymerizing an α,β-ethylenically unsaturated nitrile monomer, a conjugated diene monomer, and other monomers which can be copolymerized with these which are used as needed.

As the α,β-ethylenically unsaturated nitrile monomer, ones similar to the above-mentioned carboxyl group-containing nitrile rubber (A) can be used. Acrylonitrile is preferable.

As the conjugated diene monomer, ones similar to the above-mentioned carboxyl group-containing nitrile rubber (A) can be used. 1,3-butadiene is preferable.

Further, as the copolymerizable other monomers, a carboxyl group-containing monomer, ethylene, α-olefin monomer, aromatic vinyl monomer, α,β-ethylenically unsaturated carboxylic acid ester monomer (except ones corresponding to carboxyl group-containing monomers), fluorine-containing vinyl monomer, copolymerizable antiaging agent, etc. may be used. The specific examples are similar to the case of the above-mentioned carboxyl group-containing nitrile rubber (A).

In the liquid nitrile rubber (B) used in the present invention, the ratio of content of the α,β-ethylenically unsaturated nitrile monomer units is preferably 10 to 60 wt% in the total monomer units, more preferably 20 to 50 wt%, furthermore preferably 25 to 40 wt%.

Further, in the liquid nitrile rubber (B), the ratio of content of the conjugated diene monomer units is preferably 40 to 90 wt% in the total monomer units, more preferably 50 to 80 wt%, furthermore preferably 60 to 75 wt%.

Furthermore, in the liquid nitrile rubber (B), the ratio of content of the copolymerizable other monomers is preferably 30 wt% or less in the total monomer units, more preferably 20 wt% or less, particularly preferably 10 wt% or less.

Further, the liquid nitrile rubber (B) used in the present invention has a viscosity, which is measured at a temperature of 70°C and speed of 10 rpm by using a B-type viscometer, of preferably 1 to 30 Pa·s, more preferably 1 to 20 Pa·s, furthermore preferably 1 to 10 Pa·s, particularly preferably 3 to 9 Pa·s. Furthermore, the liquid nitrile rubber (B) used in the present invention has a weight average molecular weight converted to polystyrene using gel permeation chromatography of preferably 1,000 to 100,000, more preferably 3,000 to 50,000, furthermore preferably 3,000 to 30,000, particularly preferably 3,000 to 15,000.

The method of production of the liquid nitrile rubber (B) used in the present invention is not particularly limited. A known method of production can be employed, but for example, the method of using a molecular weight adjuster in a large amount, polymerizing the above-mentioned monomers by emulsion polymerization, and solidifying and heating the result to dry etc. may be mentioned. Further, as the liquid nitrile rubber (B), for example, a commercially available liquid nitrile rubber may also be used.

In the nitrile rubber composition of the present invention, the content of the liquid nitrile rubber (B) is preferably 1 to 50 parts by weight with respect to 100 parts by weight of the carboxyl-group containing nitrile rubber (A), more preferably 1 to 30 parts by weight, furthermore preferably 2 to 15 parts by weight. If the liquid nitrile rubber (B) is too low in content, the nitrile rubber composition is liable to end up falling in moldability (in particular, fluidity when simultaneously performing molding and cross-linking). On the other hand, if the content is too large, liquid nitrile rubber is liable to bleed out from the obtained cross-linked rubber.

### Polyamine Cross-Linking Agent (C)

The polyamine cross-linking agent (C) used in the present invention is not particularly limited so long as being a compound which has two or more amino groups or a compound of a form which has two or more amino groups at the time of cross-linking, but a compound of an aliphatic hydrocarbon or aromatic hydrocarbon with its plurality of hydrogen atoms substituted by amino groups or hydrazide structures (structures expressed by -CONHNH₂, where CO indicates a carbonyl group) and a compound of a form which becomes that at the time of cross-linking are preferable. As specific examples, hexamethylenediamine, hexamethylenediamine carbamate, tetramethylenepentamine, hexamethylenediaminecinnamaldehyde adducts, hexamethylenediaminedibenzoate salts, and other aliphatic polyvalent amines; 2,2-bis{4-(4-aminophenoxy)phenyl}propane, 4,4'-methylenedianiline, m-phenylenediamine, p-phenylenediamine, 4,4'-methylenebis(o-chloroaniline), and other aromatic polyvalent amines; dihydrazide isophthalate, dihydrazide adipate, dihydrazide sebacate, and other compounds which have two or more hydrazide structures; etc. may be mentioned. Among these as well, hexamethylenediamine carbamate is particularly preferable.

In the nitrile rubber composition of the present invention, the content of the polyamine cross-linking agent (C) is preferably 0.1 to 10 parts by weight with respect to 100 parts by weight of the carboxyl group-containing nitrile rubber (A), more preferably 0.5 to 10 parts by weight, furthermore preferably 1 to 5 parts by weight. In the present invention, by using the polyamine cross-linking agent (C) as the cross-linking agent, the nitrile rubber composition of the present invention can be made one which is excellent in cross-linkability. That is, in the present invention, by using the polyamine cross-linking agent (C), it is possible to make the obtained cross-linked rubber one which is excellent in normal physical properties and compression set resistance. If the content of the polyamine cross-linking agent (C) is too small, the nitrile rubber composition becomes insufficient in cross-linkability and the obtained cross-linked rubber is liable to deteriorate in normal physical properties and compression set resistance. On the other hand, if the content is too large, the polyamine cross-linking agent is liable to bleed out from the cross-linked rubber.

### Other Compounding Agents

Further, the nitrile rubber composition of the present invention preferably further contains, in addition to the above ingredients, a basic cross-linking accelerator. By further containing a basic cross-linking accelerator, the advantageous effects of the present invention become much more remarkable.

As specific examples of the basic cross-linking accelerator, 1,8-diazabicyclo[5,4,0]undecene-7 (below, sometimes abbreviated as "DBU") and 1,5-diazabicyclo[4,3,0]nonene-5 (below, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzoimidazole, 1-methyl-2-benzylbenzoimidazole, 1-methyl-5-nitrobenzoimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, 1-ethoxymethyl-2-methylimidazoline, and other basic cross-linking accelerators which have cyclic amidine structures; tetramethylguanidine, tetraethylguanidine, diphenylguanidine, 1,3-di-o-tolylguanidine, o-tolylbiguanide, and other guanidine-based basic cross-linking accelerators; n-butylaldehyde aniline, acetoaldehyde ammonia, and other aldehyde amine-based basic cross-linking accelerators; etc. may be mentioned. Among these as well, a guanidine-based basic cross-linking accelerator and a basic cross-linking accelerator which has cyclic amidine structures are preferable, while 1,3-di-o-tolylguanidine, 1,8-diazabicyclo[5,4,0]undecene-7, and 1,5-diazabicyclo[4,3,0]nonene-5 are more preferable, 1,8-diazabicyclo[5,4,0]undecene-7 and 1,5-diazabicyclo[4,3,0]nonene-5 are furthermore preferable, and 1,8-diazabicyclo[5,4,0]undecene-7 is particularly preferable. Note that, the above basic cross-linking accelerator which has the cyclic amidine structures may also form a salt with an organic carboxylic acid or alkylphosphoric acid etc.

In the nitrile rubber composition of the present invention, the amount of the basic cross-linking accelerator is preferably 0.1 to 20 parts by weight with respect to 100 parts by weight of the carboxyl group-containing nitrile rubber (A), more preferably 0.2 to 15 parts by weight, furthermore preferably 0.5 to 10 parts by weight. If the amount of the basic cross-linking accelerator is too small, the nitrile rubber composition becomes too slow in cross-linking speed and the cross-linking density sometimes falls. On the other hand, if the amount is too large, the cross-linkable rubber composition becomes too fast in cross-linking speed and scorching occurs or the storage stability is sometimes impaired.

Further, the nitrile rubber composition of the present invention may have blended into it, in addition to the above-mentioned ingredients, other compounding agents which are usually used in the field of rubber processing. As such compounding agents, for example, a reinforcing agent, filler, plasticizer, antioxidant, photostabilizer, scorch preventer, processing aid, slip agent, tackifier, lubricant, flame retardant, acid acceptor, antifungal agent, antistatic agent, coloring agent, silane coupling agent, co-cross-linking agent, cross-linking aid, cross-linking retardant, foam agent, etc. may be mentioned. As the amounts of these compounding agents, amounts according to the purposes of inclusion may be suitably employed.

Note that, the nitrile rubber composition of the present invention may contain rubber other than the above-mentioned carboxyl group-containing nitrile rubber (A) to the extent not impairing the advantageous effects of the present invention.

As such rubber, acrylic rubber, ethylene-acrylic acid copolymer rubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluororubber, natural rubber, polyisoprene rubber, etc. may be mentioned.

When mixing in rubber other than the carboxyl group-containing nitrile rubber (A), the amount in the nitrile rubber composition is preferably 60 parts by weight or less with respect to 100 parts by weight of the carboxyl group-containing nitrile rubber (A), more preferably 30 parts by weight or less, furthermore preferably 10 parts by weight or less.

The nitrile rubber composition of the present invention is prepared by mixing the above ingredients in a preferably nonaqueous system. As the method of suitably preparing the nitrile rubber composition of the present invention, mixing the ingredients other than the polyamine cross-linking agent (C) and other ingredients which are unstable against heat by a Bambury mixer, inner mixer, kneading, or other mixing machine for primary mixing, then transferring the mixture to open rolls etc. to add the polyamine cross-linking agent (C) and other ingredients which are unstable against heat for secondary mixing etc. may be mentioned. Note that, the primary mixing is usually performed at 10 to 200°C, preferably 30 to 180°C in temperature, for 1 minute to 1 hour, preferably 1 minute to 30 minutes, while the secondary mixing is usually performed at 10 to 100°C, preferably 20 to 60°C in temperature, for 1 minute to 1 hour, preferably 1 minute to 30 minutes.

In the nitrile rubber composition of the present invention, the compound Mooney viscosity (ML₁₊₄, 100°C) is preferably 20 to 400, more preferably 40 to 200, particularly preferably 60 to 150.

### Cross-Linked Rubber

The cross-linked rubber of the present invention is one obtained by cross-linking the above-mentioned nitrile rubber composition of the present invention.

The cross-linked rubber of the present invention can be produced by using the nitrile rubber composition of the present invention, for example, using a molding machine which corresponds to the desired shape, for example, an extruder, injection molding machine, press, rolls, etc. for molding, heating to cause a cross-linking reaction and thereby fixing the shape as a cross-linked product. In this case, it is possible to mold the rubber, then cross-link it and possible to cross-link it simultaneously with molding, but in the present invention, since it is possible to streamline the production process and, furthermore, produce a rubber part which has a complicated shape with a good yield (with little occurrence of defects), cross-linking it simultaneously with molding is preferable.

In particular, the above-mentioned nitrile rubber composition of the present invention is low in lowest torque value (ML) when simultaneously molding and cross-linking and therefore is excellent in fluidity when simultaneously molding and cross-linking. Here, FIG. 1 is a graph which shows the changes in Mooney viscosity at the time of cross-linking of a nitrile rubber composition as measured by a vibration type rheometer (graph which shows cross-linking characteristics of nitrile rubber composition). FIG. 1 shows the cross-linking time and changes in torque (changes in Mooney viscosity) when cross-linking a nitrile rubber composition (corresponding to "when simultaneously molding and cross-linking"). As shown in FIG. 1, if heating the nitrile rubber composition (starting cross-linking), softening of the nitrile rubber composition first causes the torque to drop. After the torque reaches the lowest value (ML), the torque rises. Here, the lowest value (ML) of the torque is an indicator of the fluidity of the nitrile rubber composition. The smaller the lowest value (ML) of the torque, the better the fluidity can be said to be. On the other hand, the highest value (MH) of the torque is a value which serves as an indicator of the cross-linking degree. Furthermore, t10 and t90 show the time until the torque rises 10% from the ML when the difference between the lowest value and highest value of the torque (MH-ML) is made 100% and the time until the torque rises 90% from the ML respectively.

Further, according to the present invention, when using such a nitrile rubber composition of the present invention (nitrile rubber composition which is low in lowest torque value (ML) and excellent in fluidity when simultaneously molding and cross-linking) and using a mold wich has a complicated shape to simultaneously mold and cross-link the rubber, it is possible to make the nitrile rubber composition of the present invention suitably flow at the inside of the mold until the furthest extents and thereby possible to obtain cross-linked rubber which has a complicated shape with a good yield (with little occurrence of defects).

Note that, when molding and cross-linking, the molding and cross-linking temperature is preferably 120 to 220°C, more preferably 150 to 200°C. Further, the molding and cross-linking time is preferably 5 minutes to 5 hours, more preferably 10 minutes to 1 hour.

Note that, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is obtained using the above-mentioned nitrile rubber composition of the present invention, so is excellent in compression set resistance. In particular, as explained above, the nitrile rubber composition of the present invention is low in lowest torque value (ML) and excellent in fluidity when simultaneously molding and cross-linking, can be made to suitably flow inside a mold which has a complicated shape up to the furthest extents, and can give cross-linked rubber which has a complicated shape and is excellent in compression set resistance with a good yield (with little occurrence of defects).

For this reason, the cross-linked rubber of the present invention can be used, taking advantage of the above characteristics, for O-rings, packings, diaphragms, oil seals, shaft seals, bearing seals, wellhead seals, air compressor seals, seals for sealing the chlorofluorocabon or fluorohydrocarbons or carbon dioxide used for cooling apparatuses of air-conditioners or compressors for cooling machines for air-conditioning systems, seals for sealing supercritical carbon dioxide or subcritical carbon dioxide used for washing media for precision washing, seals for roller devices (roller bearings, automobile hub units, automobile water pumps, linear guide devices, ball and screws, etc.), valves and valve seats, BOP (blow out preventers), blatters, and other various sealing members; and intake manifold gaskets attached to connecting parts of intake manifolds and cylinder heads, cylinder head gaskets attached to connecting parts of cylinder blocks and cylinder heads, rocker cover gaskets attached to connecting parts of rocker covers and cylinder heads, oil pan gaskets attached to connecting parts of oil pans and cylinder blocks or transmission cases, gaskets for fuel cell separators attached between a pair of housings sandwiching a unit cell provided with anode, electrolyte plates, and cathodes, gaskets for top covers of hard disk drives, and other various types of gaskets; printing rolls, ironmaking rolls, papermaking rolls, industrial rolls, office equipment rolls, and other various types of rolls; flat belts (film core flat belts, cord flat belts, maltilayer flat belts, single piece flat belts, etc.), V-belts (wrapped V-belts, low edge V-belts, etc.), V-ribbed belts (single V-ribbed belts, double V-ribbed belts, wrapped V-ribbed belts, back surface rubber V-ribbed belts, top cog V-ribbed belts etc.), CVT belts, timing belts, toothed belts, conveyor belts, oil immersed belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flowlines, and other various types of hoses; CVJ boots, propeller shaft boots, constant velocity joint boots, rack and pinion boots, and other various types of boots; cushion materials, dynamic dampers, rubber couplings, air springs, vibration proofing materials, and other damping material rubber parts; dust covers, car interior members, tires, covered cables, shoe soles, electromagnetic wave shields, binders for flexible printed circuit boards and other binders, fuel cell separators, and also other broad applications in the fields of cosmetics and pharmaceuticals, fields in contact with food, the electronics field, etc. Among these as well, the cross-linked rubber of the present invention can be suitably used for seal materials, belts, hoses, or gaskets.

### EXAMPLES

Below, examples and comparative examples will be given to explain the present invention more specifically, but the present invention is not limited to these examples. Below, unless particularly indicated, "parts" are based on weight. The methods of testing and evaluating the physical properties and characteristics are as follows:

### Composition of Carboxyl Group-Containing Highly Saturated Nitrile Rubber

The ratio of content of the monomer units which form the carboxyl group-containing highly saturated nitrile rubber were measured by the following method.

That is, the ratio of content of the mono n-butyl maleate units was calculated by adding 2-butanone 100 ml to 2 mm square carboxyl group-containing highly saturated nitrile rubber 0.2 g and stirring for 16 hours, then adding ethanol 20 ml and water 10 ml and, while stirring, using a 0.02N hydrous ethanol solution of potassium hydroxide for titration at room temperature by Thymolphthalein as an indicator to thereby find the number of moles of the carboxyl groups with resepct to the carboxyl group-containing nitrile rubber 100 g, and converting the number of moles which were found to the amount of mono n-butyl maleate units.

The ratios of content of the 1,3-butadiene units and saturated butadiene units were calculated by using the carboxyl group-containing highly saturated nitrile rubber to measure the iodine values before the hydrogen addition reaction and after the hydrogen addition reaction (according to JIS K 6235).

The ratio of content of the acrylonitrile units was calculated in accordance with JIS K6383 by using the Kjeldahl method to measure the nitrogen content in the carboxyl group-containing highly saturated nitrile rubber.

### Iodine Value

The carboxyl group-containing highly saturated nitrile rubber was measured for iodine value in accordance with JIS K 6235.

### Content of Carboxyl Groups

The content of the carboxyl groups was calculated by adding 2-butanone 100 ml to 2 mm square carboxyl group-containing highly saturated nitrile rubber 0.2 g and stirring for 16 hours, then adding ethanol 20 ml and water 10 ml and, while stirring, using a 0.02N hydrous ethanol solution of potassium hydroxide for titration at room temperature by Thymolphthalein as an indicator to thereby find the number of moles of the carboxyl group with respect to 100 g of the carboxyl group-containing highly saturated nitrile rubber (units: ephr).

### Cross-Linkability Test (Fluidity)

The nitrile rubber composition was tested using a rubber vulcanization tester (product name "Moving Die Rheometer MDR", made by Alpha Technologies) according to JIS K6300-2 at 170°C for 30 minutes as conditions for a cross-linkability test, whereupon a cross-linking curve such as shown in FIG. 1 was obtained. Further, from the results of the cross-linkability test, the lowest value (ML) of the torque (units: dN· m), the highest value (MH) of the torque (units: dN·m), t10 (units: min), and t90 (units: min) were measured. Note that, t10 and t90 show the time required for the torque to rise 10% from the lowest torque (ML) when the "lowest value (ML) of the torque - the highest value of the torque (ML)" is made 100% and the time required for the torque to rise 90% respetively. The smaller the lowest value (ML) of the torque, the higher the fluidity in the mold and the better the formability for obtaining a rubber part which has a complicated shape.

### Normal Physical Properties (Elongation, Tensile Stress, and Hardness)

The nitrile rubber composition was placed in a vertical 15 cm, horizontal 15 cm, depth 0.2 cm mold and press formed while applying a press pressure of 10 MPa at 170°C for 20 minutes to obtain sheet-shaped cross-linked rubber. Next, the obtained cross-linked product was transferred to a gear type oven and secondarily cross-linked at 170°C for 4 hours. The obtained sheet-shaped cross-linked rubber was punched out to a No. 3 dumbbell shape to prepare a test piece. Further, the obtained test piece was used in accordance with JIS K6251 to measure the cross-linked rubber for tensile stress (100% tensile stress) and elongation and further in accordance with JIS K6253 using a Durometer Hardness Tester (Type A) to measure the cross-linked rubber for hardness. Note that, the hardness was measured respectively at contact of the probe and after 10 seconds.

### O-Ring Compression Set Test

Using an inside diameter 30 mm, ring diameter 3 mm mold, the nitrile rubber composition was cross-linked at 170°C for 20 minutes under conditions of a press pressure of 5 MPa and was secondarily cross-linked at 170°C for 4 hours to thereby obtain a test piece for an O-ring compression set test. Further, using the obtained test piece, the O-ring compression set was measured in accordance with JIS K6262 under conditions holding the piece at 150°C for 168 hours in a state with the distance between the two flat surfaces which sandwich the O-ring shaped test piece compressed 25% in the ring thickness direction. The smaller this value, the better the compression set resistance.

### Synthesis Example 1 (Synthesis of Carboxyl Group-Containing Highly Saturated Nitrile Rubber (A1))

To a reactor, ion exchanged water 180 parts, concentration 10 wt% sodium dodecylbenzene sulfonate aqueous solution 25 parts, acrylonitrile 36 parts, mono n-butyl maleate 6 parts, and t-dodecyl mercaptan (molecular weight adjuster) 0.5 part were successively charged. The inside gas was replaced with nitrogen three times, then 1,3-butadiene 58 parts was charged. Next, the reactor was held at 5°C, then cumen hydroperoxide (polymerization initiator) 0.1 part was charged. While stirring, the polymerization reaction was continued. At the points of time when the polymerization conversion rate reached 85%, concentration 10 wt% hydroquinone aqueous solution (polymerization terminator) 0.1 part was added to stop the polymerization reaction. Next, at a water temperature 60°C, the residual monomers were removed under reduced pressure to obtain a latex of nitrile rubber (solid content concentration: about 30 wt%).

Next, to make the content of palladium with respect to the dry weight of rubber contained in the latex, which is obtained by the above, 1,000 ppm, the autoclave was charged with the latex fo the nitrile rubber and a palladium catalyst (solution of mixture of 1 wt% palladium acetone acetate solution and equal weight of ion exchanged water) and a hydrogen addition reaction was performed at a hydrogen pressure of 3 MPa and temperature of 50°C for 6 hours to obtain a latex of a highly saturated nitrile rubber.

To the latex of the obtained nitrile group-containing highly saturated copolymer rubber, two volumes of methanol were added to cause coagulation, then the result was vacuum dried at 60°C for 12 hours to thereby obtain the carboxyl group-containing highly saturated nitrile rubber (A1).

The composition of the monomer units of the carboxyl group-containing highly saturated nitrile rubber (A1) was acrylonitrile units 36.0 wt%, mono-n-butyl maleate units 6.0 wt%, 1,3-butadiene units (including hydrogenated parts) 58.0 wt%, the content of carboxyl groups was 0.030 ephr, and, further, iodine value was 10 and the polymer Mooney viscosity [ML₁₊₄, 100°C] was 55.

### Example 1

To 100 parts of the carboxyl group-containing highly saturated nitrile rubber (A1) which was obtained in Synthesis Example 1, liquid nitrile rubber (product name "Nipol-1312", made by Zeon Corporation, acrylonitrile content 28 wt%, viscosity measured at temperature 70°C and speed 10 rpm using B-type viscometer: 7.2Pa·s) 5 parts, FEF carbon black (product name "Seast SO", made by Tokai Carbon) 40 parts, tri-2-ethylhexyl trimellitate (product name "Adekacizer C-8", made by ADEKA, plasticizer) 5 parts, 4,4'-bis-(α,α'-dimethylbenzyl) diphenylamine (product name "Nocrac CD", made by Ouchi Shinko Chemical Industrial, antiaging agent) 1.5 parts, stearic acid (slip agent) 1 part, polyoxyethylenealkylether phosphoric acid ester (product name "Phosphanol RL210", made by Toho Chemical Industry, processing aid) 1 part were added and the mixture was kneaded at 110°C for 5 minutes. Next, the obtained mixture was transferred to rolls which were warmed to a temperature of 40°C. 1,8-diazabicyclo [5,4,0]-undecene-7 (DBU) (product name "RHENOGRAN XLA-60 (GE2014)", made by RheinChemie, comprising DBU60% (including part forming zinc dialkyldiphosphate salt) and acrylic acid polymer and dispersant 40%, basic cross-linking accelerator) 4 parts, and hexamethylenediamine carbamate (product name "Diak#1", made by Dupont Dow Elastomer, polyamine cross-linking agent) 2.4 parts were added and kneaded to obtain a nitrile rubber composition.

Further, the obtained nitrile rubber composition was evaluated and tested by the above-mentioned methods for cross-linkability, normal physical properties (elongation, tensile stress, hardness), and O-ring compression set. The results are shown in Table 1.

### Example 2

Except for changing the amount of the liquid nitrile rubber (product name "Nipol-1312", made by Zeon Corporation) from 5 parts to 10 parts, the same procedure was followed as in Example 1 to prepare a nitrile rubber composition and the same procedure was followed to evaluate it. The results are shown in Table 1.

### Comparative Example 1

Except for not using the liquid nitrile rubber, the same procedure was followed as in Example 1 to prepare a nitrile rubber composition and the same procedure was followed to evaluate it. The results are shown in Table 1.

### Comparative Example 2

To hydrogenated nitrile rubber not containing carboxyl groups (product name "Zetpol 2010L", made by Zeon Corporation) 100 parts, liquid nitrile rubber (product name "Nipol-1312", made by Zeon Corporation) 5 parts, FEF carbon black (product name "Seast SO", made by Tokai Carbon) 40 parts, trimellitic acid ester (product name "Adekacizer C-8", made by ADEKA, plasticizer) 5 parts, 4,4'-bis-(α,α'-dimethylbenzyl)diphenylamine (product name "Nocrac CD", made by Ouchi Shinko Chemical Industrial, antiaging agent) 1.5 parts, 2-mercaptobenzoimidazole zinc salt (product name "Nocrac MBZ", made by Ouchi Shinko Chemical Industrial, antiaging agent) 1.5 parts, stearic acid (slip agent) 1 part, and zinc white (ZnO) 5 parts were added. The mixture was kneaded at 110°C for 5 minutes. Next, the obtained mixture was transferred to rolls which were warmed to a temperature of 40°C. 1,3-bis(t-butylperoxyisopropyl)benzene 40% product (product name "Vul Cup40KE", made by Arkema, organic peroxide cross-linking agent) 10 parts was added and kneaded to obtain a nitrile rubber composition.

Further, the obtained nitrile rubber composition was evaluated in the same way as Example 1. The results are shown in Table 1.

### Table 1

**Table 1**

| | | | Example | | Comparative Example | |
|---|---|---|---|---|---|---|
| | | | 1 | 2 | 1 | 2 |
| Formulation | | | | | | |
| | Carboxyl group-containing highly saturated nitrile rubber | (parts) | 100 | 100 | 100 | |
| | Highly saturated nitrile rubber (non-carboxyl-group containing | (parts) | | | | 100 |
| | Liquid nitrile rubber | (parts) | 5 | 10 | | 5 |
| | Carbon black | (parts) | 40 | 40 | 40 | 40 |
| | Tri-2-ethylhexyl trimellitate | (parts) | 5 | 5 | | 5 |
| | 4,4'-bis-(*α,α*-dimethylbenzyl)diphenylamine | (parts) | 1.5 | 1.5 | 1.5 | 1.5 |
| | 2-mercaptobenzoimidazole zinc salt | (parts) | | | | 1.5 |
| | Stearic acid | (parts) | 1 | 1 | | 1 |
| | Polyoxyethylenealkylether phosphoric acid ester | (parts) | 1 | 1 | 1 | |
| | Zinc oxide (ZnO) | (parts) | | | | 5 |
| | Hexamethylenediamine carbamate | (parts) | 2.4 | 2.4 | 2.4 | |
| | 1,3-bis(t-butylperoxyisopropyl)benzene (40% product) | (parts) | | | | 10 |
| | 1,8-diazabicyclo[5,4,0]-undecene-7 (60% product) | (parts) | 4 | 4 | 4 | |

| Cross-linkability test (170°C, 30 minutes) | | | | | | |
|---|---|---|---|---|---|---|
| | Lowest torque (ML) | (dN·m) | 0.5 | 0.3 | 0.8 | 0.9 |
| | Highest torque (MH) | (dN·m) | 23.4 | 20.4 | 26.3 | 24.4 |
| | t10 | (min.) | 1.2 | 1.1 | 1.1 | 1.3 |
| | t90 | (min.) | 11.8 | 11.6 | 11.4 | 12.3 |

| Normal physical properties | | | | | | |
|---|---|---|---|---|---|---|
| | Elongation | (%) | 260 | 260 | 260 | 340 |
| | 100% tensile stress | (MPa) | 4.8 | 4.3 | 5.4 | 4.4 |
| | Hardness (at contact)[DURO A] | | 69 | 67 | 72 | 73 |
| | Hardness (after 10 seconds)[DURO A] | | 67 | 65 | 70 | 70 |

| Compression set test (150°C, 168 hours) | | | | | | |
|---|---|---|---|---|---|---|
| | O-ring compression set | (%) | 34.6 | 33.6 | 33.4 I | 81.1 |

From Table 1, a nitrile rubber composition which is comprised of a carboxyl group-containing nitrile rubber (A) to which a liquid nitrile rubber (B) and a polyamine cross-linking agent (C) are mixed had a low lowest value (ML) of the torque at the time of cross-linking, had an excellent fluidity at the time of cross-linking, and, further, gave a cross-linked rubber which was excellent in compression set resistance (Examples 1 and 2). In particular, from the results of Examples 1 and 2, it can be said that since the nitrile rubber composition of the present invention is low in the lowest value (ML) of the torque at the time of cross-linking, even when using a mold which has a complicated shape, the composition can flow to the furthest extents of the mold and therefore cross-linked rubber which has a complicated shape can be obtained with a good yield (with little occurrence of defects).

On the other hand, when using the carboxyl group-containing nitrile rubber (A), but not mixing in liquid nitrile rubber (B), the lowest value (ML) of the torque at the time of cross-linking was high and the fluidity at the time of cross-linking was poor (Comparative Example 1).

Further, when using highly saturated nitrile rubber which does not contain carboxyl groups instead of the carboxyl group-containing nitrile rubber (A), despite mixing in the liquid nitrile rubber (B), the lowest value (ML) of the torque at the time of cross-linking was high, the fluidity at the time of cross-linking was poor, and, furthermore, the obtained cross-linked rubber was poor in compression set resistance (Comparative Example 2).

## Claims

1. A nitrile rubber composition containing a carboxyl group-containing nitrile rubber (A), a liquid nitrile rubber (B), and a polyamine-based cross-linking agent (C).

2. The nitrile rubber composition as set forth in claim 1, wherein said carboxyl group-containing nitrile rubber (A) has an iodine value of 120 or less, said iodine value being measured in accordance with JIS K 6235.

3. The nitrile rubber composition as set forth in claim 1 or 2,
wherein said carboxyl group-containing nitrile rubber (A) contains α,β-ethylenically unsaturated nitrile monomer units 5 to 60 wt%, carboxyl group-containing monomer units 0.1 to 20 wt%, and conjugated diene monomer units 15 to 94.9 wt%, wherein
the ratio of content of said α,β-ethylenically unsaturated nitrile monomer units is calculated in accordance with JIS K6383 by using a Kjeldahl method to measure the nitrogen content in said carboxyl group-containing highly saturated nitrile rubber,
the ratio of content of said carboxyl group-containing monomer units is calculated by titrating to find the number of moles of carboxyl groups with respect to said carboxyl group-containing nitrile rubber 100 g and by converting the number of moles which is found to the amount of said carboxyl group-containing monomer units, and
the ratio of content of said conjugated diene monomer units is calculated by using said carboxyl group-containing highly saturated nitrile rubber to measure iodine values before the hydrogen addition reaction and after the hydrogen addition reaction in accordance with JIS K 6235.

4. The nitrile rubber composition as set forth in any one of claims 1 to 3, wherein a content of said liquid nitrile rubber (B) is 1 to 50 parts by weight with respect to 100 parts by weight of said carboxyl group-containing nitrile rubber (A).

5. The nitrile rubber composition as set forth in any one of claims 1 to 4, wherein said liquid nitrile rubber (B) contains α,β-ethylenically unsaturated nitrile monomer units 10 to 60 wt% and conjugated diene monomer units 40 to 90 wt%.

6. The nitrile rubber composition as set forth in any one of claims 1 to 5, further containing a basic cross-linking accelerator.

7. A cross-linked rubber obtained by cross-linking the nitrile rubber composition as set forth in any one of claims 1 to 6.

## Patentansprüche

1. Nitrilkautschukzusammensetzung, enthaltend einen carboxylgruppenhaltigen Nitrilkautschuk (A), einen Flüssignitrilkautschuk (B) und ein polyaminbasiertes Vernetzungsmittel (C).

2. Nitrilkautschukzusammensetzung gemäß Anspruch 1, wobei der carboxylgruppenhaltige Nitrilkautschuk (A) eine Iodzahl von 120 oder weniger aufweist, wobei die Iodzahl gemäß JIS K 6235 gemessen wird.

3. Nitrilkautschukzusammensetzung gemäß Anspruch 1 oder 2, wobei der carboxylgruppenhaltige Nitrilkautschuk (A) α,β-ethylenisch ungesättigte Nitrilmonomereinheiten zu 50 bis 60 Gew.-%, carboxylgruppenhaltige Monomereinheiten zu 0,1 bis 20 Gew.-%, und konjugierte Dienmonomereinheiten zu 15 bis 94,9 Gew.-% enthält, wobei
das Verhältnis des Gehalts an den α,β-ethylenisch ungesättigten Nitrilmonomereinheiten gemäß JIS K 6383 unter Verwendung eines Kjeldahl-Verfahrens zur Bestimmung des Stickstoffgehalts in dem carboxylgruppenhaltigen hochgesättigten Nitrilkautschuk berechnet wird,
das Verhältnis des Gehalts der carboxylgruppenhaltigen Monomereinheiten durch Titrieren errechnet wird, um die Molanzahl der Carboxylgruppen bezüglich 100 g des carboxylgruppenhaltigen Nitrilkautschuks zu ermitteln, und durch Umrechnen der Molanzahl, welche gefunden wird, in die Menge der carboxylgruppenhaltigen Monomereinheiten, und
das Verhältnis des Gehalts der konjugierten Dienmonomereinheiten errechnet wird durch Verwenden des carboxylgruppenhaltigen hochgesättigten Nitrilkautschuks, um die Iodzahlen vor der Wasserstoffadditionsreaktion und nach der Wasserstoffadditionsreaktion gemäß JIS K 6235 zu messen.

4. Nitrilkautschukzusammensetzung gemäß einem der Ansprüche 1 bis 3, wobei der Gehalt des Flüssignitrilkautschuks (B) 1 bis 50 Gewichtsteile bezüglich 100 Gewichtsteilen carboxylgruppenhaltigen Nitrilkautschuks (A) beträgt.

5. Nitrilkautschukzusammensetzung gemäß einem der Ansprüche 1 bis 4, wobei der Flüssignitrilkautschuk (B) α,β-ethylenisch ungesättigte Nitrilmonomereinheiten zu 10 bis 60 Ges.-% und konjugierte Dienmonomereinheiten zu 40 bis 90 Gew.-% enthält.

6. Nitrilkautschukzusammensetzung gemäß einem der Ansprüche 1 bis 5, des Weiteren enthaltend einen basischen Vernetzungs - beschleuniger.

7. Vernetzter Kautschuk, erhalten durch Vernetzen der Nitrilkautschukzusammensetzung gemäß einem der Ansprüche 1 bis 6.

## Revendications

1. Composition de caoutchouc nitrile contenant un caoutchouc nitrile contenant un groupe carboxyle (A), un caoutchouc nitrile liquide (B) et un agent de réticulation à base de polyamine (C).

2. Composition de caoutchouc nitrile selon la revendication 1, dans laquelle ledit caoutchouc nitrile contenant un groupe carboxyle (A) a un indice d'iode de 120 ou moins, ledit indice d'iode étant mesuré en conformité avec la norme JIS K 6235.

3. Composition de caoutchouc nitrile selon la revendication 1 ou 2, dans laquelle ledit caoutchouc nitrile contenant un groupe carboxyle (A) contient des motifs de monomère de nitrile α,β-éthyléniquement insaturé à 5 à 60 % en poids, des motifs contenant un groupe carboxyle à 0,1 à 20 % en poids, et des motifs de monomère de diène conjugué à 15 à 94,9 % en poids, dans laquelle le rapport de la teneur desdits motifs de monomère de nitrile α,β-éthyléniquement insaturé est calculé en conformité avec la norme JIS K6383 à l'aide d'un procédé Kjeldahl afin de mesurer la teneur en azote dans ledit caoutchouc nitrile hautement saturé contenant un groupe carboxyle,
le rapport de la teneur desdits motifs de monomère contenant un groupe carboxyle est calculé par titrage afin de trouver le nombre de moles des groupes carboxyle par rapport à 100 g dudit caoutchouc nitrile contenant un groupe carboxyle et par conversion du nombre de moles qui est trouvé en la quantité desdits motifs de monomère contenant un groupe carboxyle, et
le rapport de la teneur desdits motifs de monomère de diène conjugué est calculé à l'aide dudit caoutchouc nitrile hautement saturé contenant un groupe carboxyle afin de mesurer les indices d'iode avant la réaction d'addition d'hydrogène et après la réaction d'addition d'hydrogène en conformité avec la norme JIS K 6235.

4. Composition de caoutchouc nitrile selon l'une quelconque des revendications 1 à 3, dans laquelle une teneur dudit caoutchouc nitrile liquide (B) est de 1 à 50 parties en poids par rapport à 100 parties en poids dudit caoutchouc nitrile contenant un groupe carboxyle (A).

5. Composition de caoutchouc nitrile selon l'une quelconque des revendications 1 à 4, dans laquelle ledit caoutchouc nitrile liquide (B) contient des motifs de monomère de nitrile α,β-éthyléniquement insaturé à 10 à 60 % en poids, et des motifs de monomère de diène conjugué à 40 à 90 % en poids.

6. Composition de caoutchouc nitrile selon l'une quelconque des revendications 1 à 5, comprenant en outre un accélérateur de réticulation basique.

7. Caoutchouc réticulé obtenu par réticulation de la composition de caoutchouc nitrile selon l'une quelconque des revendications 1 à 6.
